# EUROPEAN PATENT SPECIFICATION

(11) **EP 0 458 454 B1**
(45) Date of publication and mention of the grant of the patent: **02.11.1994**
(21) Application number: 91303302.3
(22) Date of filing: 15.04.1991
(51) Int. Cl.: E05F 3/14, E05F 3/22, F16C 11/10

(54) **Door closer**
Türschliesser
Ferme-porte

(30) Priority: 23.05.1990 JP 133135/90
(43) Date of publication of application: 27.11.1991
(73) Proprietor: SUGATSUNE INDUSTRIAL CO., LTD., Chiyoda-ku Tokyo (JP)
(72) Inventor: Ohshima, Kazuyoshi Sugatsune Industrial Co. Ltd, Chiyoda-ku Tokyo (JP)
(74) Representative: Gibson, Stewart Harry

(56) References cited:
- DE-C- 574 619
- DE-U- 8 627 459
- FR-A- 2 433 627
- US-A- 2 184 607

## Description

This invention relates to a door closer adapted to gradually close a door by means of a return spring, automatically closing the door by the accumulated recovering force of the spring against a braking force provided by the resistance of a high viscous liquid, e.g. polyisobutyne.

A conventional door closer is known, which consists of a hydraulic cylinder provided in an elongate body case, a piston telescopically inserted into the hydraulic cylinder through a return spring, a rack engraved on one sidewall of the piston, and a pinion rotatably supported to a pinion shaft to be engaged with the rack at one side of the cylinder.

In the door closer of the arrangement described above, the body case is fixed to the door, a link pivotally secured at one end thereof to the end of an arm fixed to the pinion shaft, the arm being provided at the other end thereof with a mounting bracket, and the mounting bracket is fixed to an upper frame. Thus, the door closer is mounted at the door. The piston is moved against the return spring by the pinion at the time of opening the door, and the door is automatically closed by the accumulated recovering force of the return spring at the time of closing the door.

Cutout toothed portions are formed at the rack and the portion of the pinion in the door closer. Thus, the door adopts a free state in a range from a predetermined door opening angle to a door fully-opened angle, and the door can be freely opened and closed, or locked. Further, the teeth of both ends of the rack and the pinion are engaged with each other to lock the door at a predetermined opening angle.

However, in the door closer of the arrangement described above, the piston is a power transmission means to be driven by the pinion meshed with the rack formed on one sidewall of the piston. Therefore, there arise various problems as will be described below. Bearings for rotatably supporting the pinion shaft to the body case are worn relatively early due to the thrust load of the pinion shaft. When power is transmitted to the piston through the rack of one side, a bending load is applied to the piston in its moving direction. Thus, the piston and the cylinder can be irregularly worn. When the door is locked at a predetermined door opening angle or the lock of the door is released, an unpleasant vibration noise is generated due to the forcible disengagement or engagement of the end teeth of the rack and the pinion. Or, the end teeth of the rack and the pinion are easily damaged due to the collision of the rack and the pinion when the door is abruptly opened or closed by a strong force or when the door is effected by strong wind in the closing direction at the locked position of a predetermined door opening angle.

DE-C-574619 discloses a door closer comprising a damper having a body case, a shaft rotatably mounted in the centre of the body case, a chamber formed in the body case and filled with a highly viscous liquid, a blade fixed to the shaft and mounted inside the chamber, the blade being rotated together with the shaft by a force applied to a rotatable sub case of the damper by a sub arm fixed to the sub case when the door is opened, the force being accumulated in a return spring which serves automatically to close the door against the resistance force of the highly viscous liquid in the damper.

We have now devised a door closer which alleviates the problems with conventional door closers and which can lock the force accumulated in the return spring once the door reaches a predetermined opening angle, whereupon the door can be freely opened to a wider angle.

We have also devised a door closer in which the door can be locked at a predetermined angle within the range of angles through which the door can be freely opened.

In accordance with this invention, the door closer is characterised in that the damper comprises a pair of said chambers filled with the highly viscous fluid which communicates between the two chambers via passages formed in the shaft, a pair of said blades fixed to the shaft and mounted inside respective said chambers, check valves disposed in passages of the blades, a stationary plate fixed to the body case, an intermediate plate engaged with the shaft for rotation with the shaft and connected to the return spring so as to be rotatable through a predetermined angle against said return spring, a movable plate engaged with the sub case for rotation with the sub case, the plates being vertically stacked with their center along the axis of the shaft, a plurality of rotary connectors respectively movably engaged in a plurality of through holes formed at intervals along a circumferential line on said intermediate plate, the rotary connectors having diameters larger than the thickness of said intermediate plate, and an angle clutch comprising recesses formed in the stationary and movable plates and arranged for disengageably engaging the rotary connectors in the corresponding through holes, in such a manner that, as the door is opened from a fully closed position and the movable plate is correspondingly rotated, the movable plate and the intermediate plate are locked together until the door reaches a predetermined partly-open position and, upon further rotation of the movable plate in the door opening direction and up to a fully-open position of the door, the movable plate is released from its lock with the intermediate plate and the intermediate plate is locked to the stationary plate.

The external force of the door opening operation is applied to the rotational shaft as a rotary force in one direction of the rotational shaft thereby to rotate the rotational shaft and the rotary blades integral with the rotational shaft in one direction.

At this time, the check valves in the passages of the rotary blades are opened by the flow of the highly viscous liquid in the respective chambers, the highly viscous liquid is fed to the opposite sides of the respective chambers, and fed from the high pressure chambers of both the chambers to the other, low pressure chambers through the passages of the rotational shaft.

Here, since part of each rotary connector, movably engaged with its through hole of the intermediate plate, is engaged with the recess of the movable plate so that both the plates are locked at the time of opening the door as described above, the movable plate is rotated in one direction by the door opening force, and the intermediate plate is rotated therewith in the same direction.

When the intermediate plate is rotated, the return spring latches at the ends to the intermediate plate and the body case is rewound to generate power. As a result, the recovering force is accumulated at the return spring. Thus, the rotary connectors tend to be moved downward by the recovering force on the return spring.

Since the intermediate plate is set so as not to be rotated any further after the intermediate plate is rotated to a predetermined angle lying at the partly-open position of the door, when it is continuously rotated in the same direction as the movable plate, the rotary connectors are disengaged from the recesses of the movable plate, moved to the stationary plate side, and engaged with the recesses of the stationary plate. Thus, the intermediate plate is locked to the stationary plate as the door is opened from the partly-open position to the fully open position.

Therefore, the spring power is locked at the predetermined angle, and the movable plate becomes free to move at angles greater than the predetermined angle. Consequently, the door can be freely moved and stopped at any position.

Preferably the angle clutch further comprises a plurality of door locking recesses spaced along the same circumferential line on said movable plate as the previously-mentioned recesses, said door locking recesses being arranged for disengageably engaging said rotary connectors, and said door locking recesses being shallower than the previously-mentioned recesses so that the rotary connectors can lock together the movable plate, the intermediate plate and the stationary plate when the door is opened to a position lying between said partly-open position and said fully-open position.

When the door adopts its free state as described above, the rotary connectors experience a force tending to move themselves upward. Thus, when the movable plate is continuously rotated in the same direction, the rotary connectors are engaged with the shallow door locking recesses of the movable plate, and the door is locked to a predetermined opening angle.

At this time, the rotary connectors are engaged with the recesses at the stationary plate and with the door locking recesses of the movable plate.

When the movable plate is rotated further in the same direction, the rotary connectors disengage from the door locking recesses of the movable plate. Therefore, the movable plate becomes free again and the door adopts its free state again.

The damper is OFF when the door is within a range of angles greater than the angle of the partly-open position, so that the door can be moved freely.

When the door is closed the damper becomes active and the spring power is released, causing the door to automatically close slowly. When the door is almost closed the spring power is removed and the damper is turned OFF so that the door continues to close on its own.

The operation by the damper utilises the resistance force generated when the highly viscous liquid is fed through the passage in the rotational shaft from the high pressure chamber to the other low pressure chamber when the door is closed.

More specifically, when the rotational shaft is rotated in the door closing direction, the check valve is pushed by the highly viscous liquid in order to close the passages through the rotary blades.

Therefore, the highly viscous liquid is fed from the high pressure chamber to the other low pressure chamber through the passages in the rotational shaft. The cross sectional area of the passage is set to be smaller than the passages through the rotary blades. Therefore, the resistance force of the highly viscous liquid operates as a damping force.

An embodiment of this invention will now be described by way of example only and with reference to the accompanying drawings, in which:
Fig. 1 is a longitudinal sectional view showing an embodiment of door closer according to the present invention;
Fig. 2 is a longitudinal sectional view taken along the line II-II as seen from arrows in Fig. 1;
Fig. 3 is an exploded perspective view of the embodiment;
Figs. 4(a), 4(b), 4(c) and 4(d) are explanatory views showing a damper of the door closer, respectively when the door is closed, the door is opening, the door is opened, and the door is closing;
Fig. 5 is a plan view showing the damper;
Figs. 6(a), 6(b) and 6(c) are explanatory views of an angle clutch of the door closer, respectively when the door is closed, when the door is at a spring power lock position and when the door is in a freely movable state;
Figs. 7(a), 7(b), 7(c) and 7(d) are explanatory views of the angle clutch, respectively when the door is closed, when the door is at the spring power lock position, when the door is in a locked position, and when the door is in a freely movable state;
Figs. 8(a), 8(b), 8(c) and 8(d) are longitudinal sectional views respectively showing the relationship of the positions between a rotary connector and a recess in the states shown in Figs. 7(a), 7(b), 7(c) and 7(d);
Figs. 9(a) and 9(b) are views to explain the operation of the door closer respectively when the door is being opened and when it is being closed; and
Fig. 10 is a plan view showing an example of the door closer in use.

First, a damper A will be described.

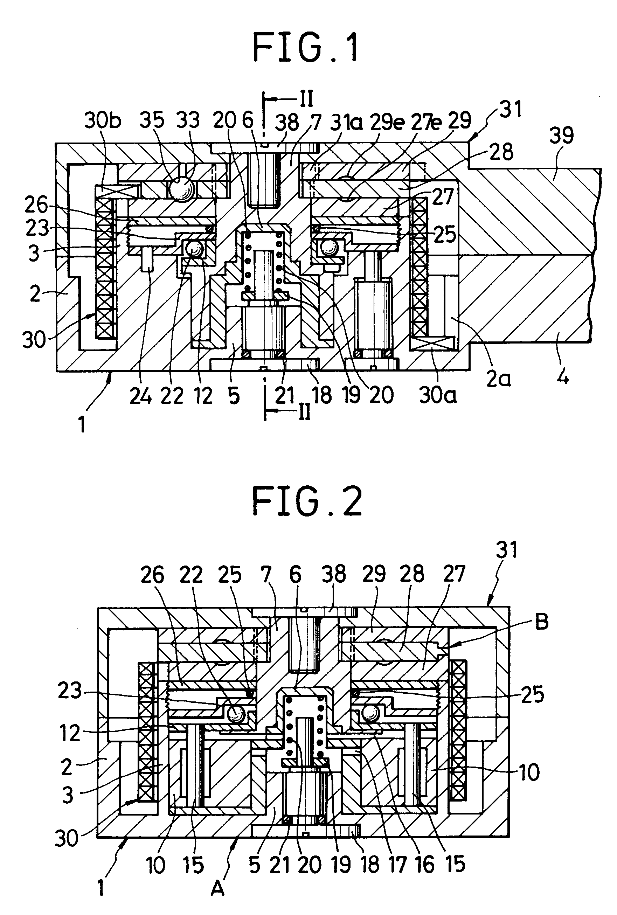

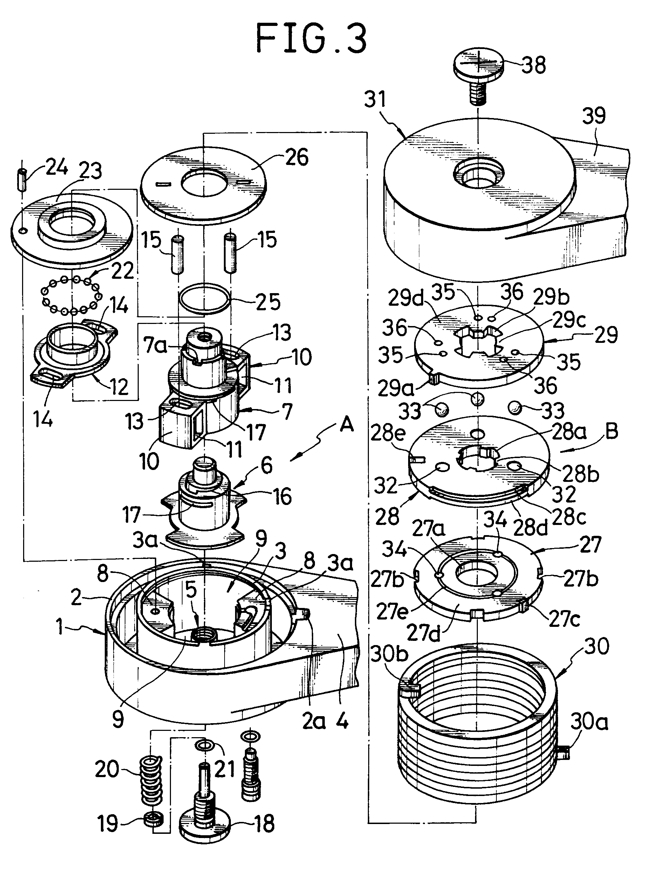

As shown in Figs. 1 to 3, a body case 1 of a bottomed shape is concentrically and integrally formed with an outer cylinder 2 and an inner cylinder 3, and an arm 4 radially projects from one outside of the outer cylinder 3.

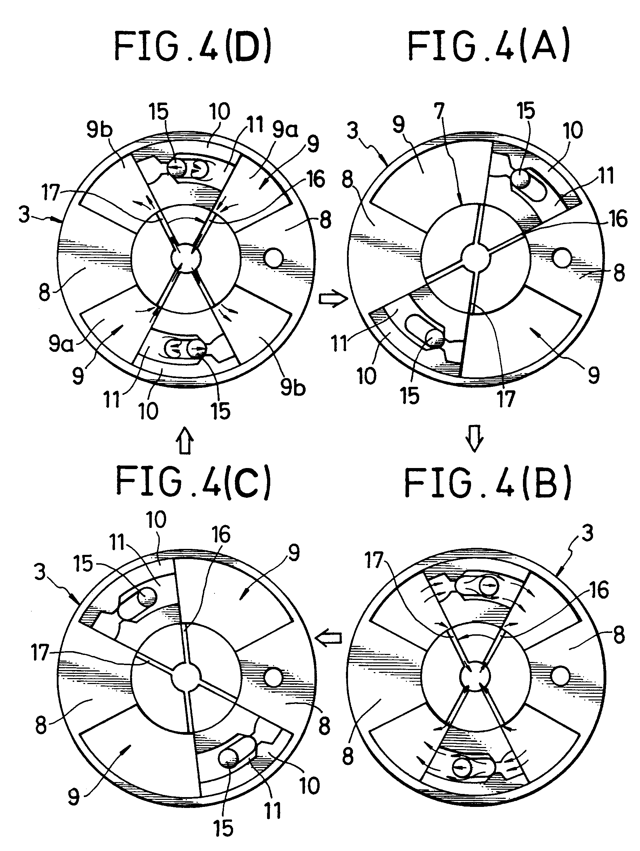

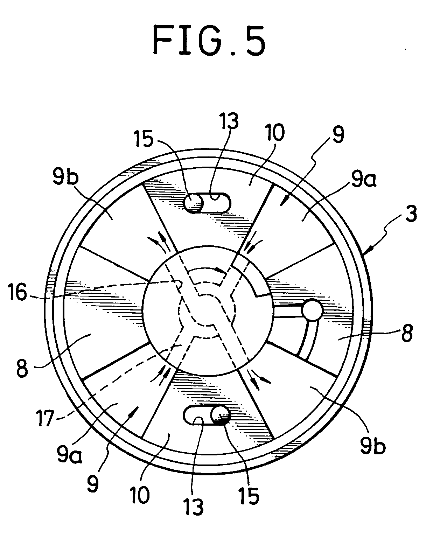

A bearing 6 which is externally engaged with a threaded cylinder 5 erected from the center of the bottom of the inner cylinder 3 is fixed to the central position of the inner cylinder 3 in a non-rotating state. Further, a rotational shaft 7 is rotatably externally mounted on the bearing 6, and a pair of chambers 9 and 9 of substantially sector shape in plan are formed in the inner cylinder 3 by the rotational shaft 7 and projections 8 and 8 formed at the right and left sides of the inner cylinder 3 as shown in Figs. 4 and 5.

A pair of rotary blades 10 and 10 are radially symmetrically projected on the rotational shaft 7, and are rotatably internally mounted in the pair of chambers 9 and 9.

As shown in Figs. 4 and 5, passages 11 and 11 are respectively circumferentially passed through the pair of rotary blades 10 and 10 to communicate with high and low pressure chambers 9a and 9b of the chambers 9 and 9. Check valves 15 and 15 of spheres or rolls, etc., are so movably inserted in long holes 13, 13 and 14, 14 passed through the rotary blades 10 and 10 and an outer shaft 12 externally mounted on the rotational shaft 7 in communication with the passages 11 and 11 to open the passages 11 and 11 to the flow of high viscous liquid contained in the inner cylinder 3 by the counterclockwise rotation in Figs. 4 and 5 of the rotational shaft 7 by the door opening operation as to open or close, the passages 11 and 11.

The bearing 6 and the rotational shaft 7 are formed in cylindrical shape, a passage 16 for communicating with the high pressure chambers 9a and 9a of both the chambers 9 and 9 and a passage hole 17 for communicating with the low pressure chambers 9b and 9b are formed in a slit shape in the bearing 6 and the shaft 7.

An adjusting screw 18 engaged from the bottom of the body case 1 with the threaded cylinder 5 through an O-ring 21 is internally mounted through a regulating valve 19 and a regulating spring 20 in the bearing 6. The door is slowly closed by utilizing a damper force when the high viscous liquids in the high pressure chambers 9a and 9a are introduced from the passage 16 into the bearing 6 through a gap between the adjusting valve 19 and the bearing 6 to be discharged from the passage 17 into the low pressure chambers 9b and 9b at the time of closing the door.

The damper force is regulated by varying the gap between the regulating valve 19 and the bearing 6 by vertically moving up or down the regulating valve 19 by vertically threading the adjusting screw 18.

Further, a plurality of rolling balls 22,.. are placed on the outer shaft 12, the rolling balls 22,.. are interposed between a shaft holding plate 12 externally mounted on the rotational shaft 7 and the outer shaft 12, the shaft holding plate 23 is fixed to the body case 1 by a pin 24, and an O-ring 25 is further externally mounted on the rotational shaft 7, a cover 26 is engaged with the inner cylinder 3, and high viscous liquid is sealed in both the chambers 9 and 9, thereby constituting a damper A.

Then, an angle clutch B will be described.

As shown in Figs. 1 to 8, the rotational shaft 7 projecting from the cover 26 upward is inserted into the central hole 27a of a stationary plate 27 arranged on the inner cylinder 3, and recesses 27b,.. provided at the peripheral edge thereof are respectively engaged with projections 3a,.. formed on the upper end of the inner cylinder 3, thereby fixing the stationary plate 27 in a stacked state.

An intermediate plate 28 and a movable plate 29 are disposed in a stacked state on the stationary plate 27. The intermediate plate 28 is engaged with the rotational shaft 7 by engaging projections 28b,.. projected inwardly from the central hole 27 with the grooves 7a,.. formed on the rotational shaft 7, and the intermediate plate 28 is so restricted at its rotating angle as to be rotated at only a predetermined angle by engaging projections 29a and 27c projected on the outer peripheries of the movable plate 29 and the stationary plate 27 with grooves 28c and 28d formed on both upper and lower outer surfaces of the peripheries thereof.

The other end 30b of a return spring 30 internally mounted between the outer cylinder 2 and the inner cylinder 3 and latched at one end 30a thereof to the groove 2a of the outer cylinder 2 is latched to the groove 28c cut out on the outer periphery of the intermediate plate 28.

On the other hand, the movable plate 29 is fixed into the upper sub case 31 fixed to the rotational shaft 7 by engaging projections 29c,.. projected from the inner periphery of the central hole 29b of the movable plate 29 with the projections 31a,.. projected on the inner surface of the sub case 21 fixed to the shaft 7 via a stop screw 38.

In the exemplified embodiment as shown, three through holes 32,.. are circumferentially opened at an equal interval on the rotating circumferential line of the intermediate plate 28, and rotary connectors 33,.. of spheres or rolls, etc., are so respectively rotatably engaged within the through holes 32,.. as to be loosely movable in upward and downward directions.

On the other hand, three recesses 34,.. and 35,.. for disengageably engaging the rotary connectors 33,.. are respectively formed in substantially sectionally spherical shape having the same curvature as that of the rotary connector 33 in the same number as that of the through holes 32 of the intermediate plate 28 at an equal interval in a circumferential direction on the upper and lower surfaces of the intermediate plate 28 and the opposed surfaces 27d and 29d of the stationary plate 27 and the movable plate 29 opposed to the intermediate plate 28.

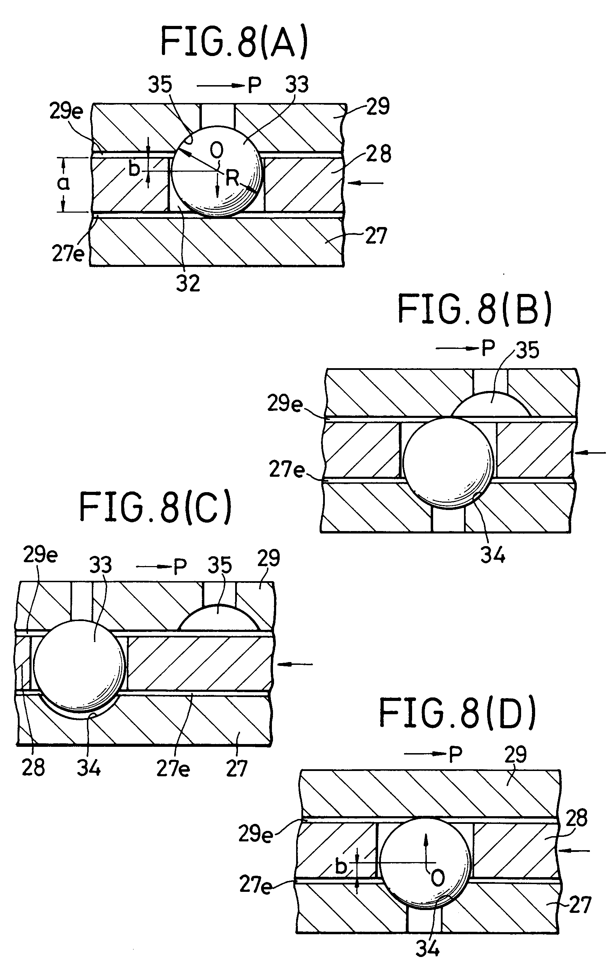

Here, the rotary connectors 33,.. are formed, as evidently shown in Figs. 8(a) to 8(d), in diameters R larger by a predetermined size than the thickness a of the intermediate plate 28, and so formed as to project in a predetermined size from the openings of the through holes 32 upward or downward in such a manner that the center O is always disposed at a position of a predetermined size b from the upper or lower surface of the intermediate plate 28 in the through holes 32.

On the other hand, the recesses 34,.. and 35,.. of the stationary plate 27 and the movable plate 29 are so set in depths in advance that, when the rotary connectors 33 are engaged, the rotary connectors 33 are not introduced into the central positions but the intermediate plate 28, the stationary plate 27 and the intermediate plate 28, the movable plate 29 can be respectively locked in the engaging states of the rotary connectors 33.

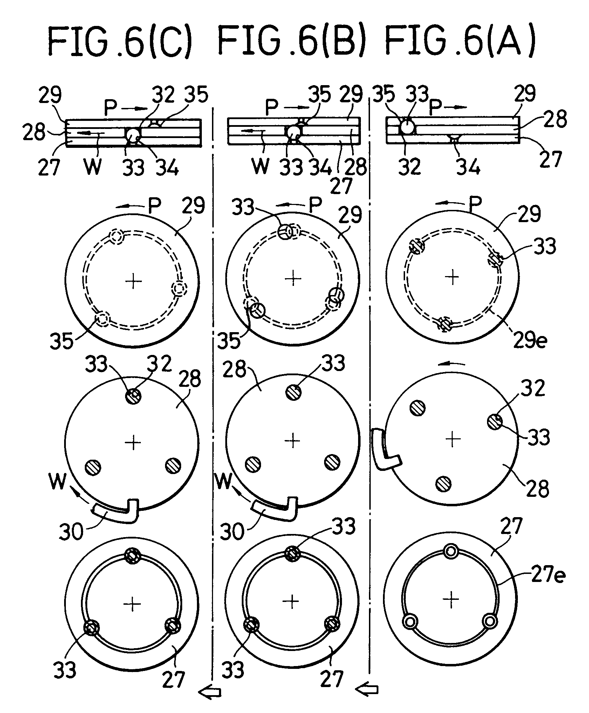

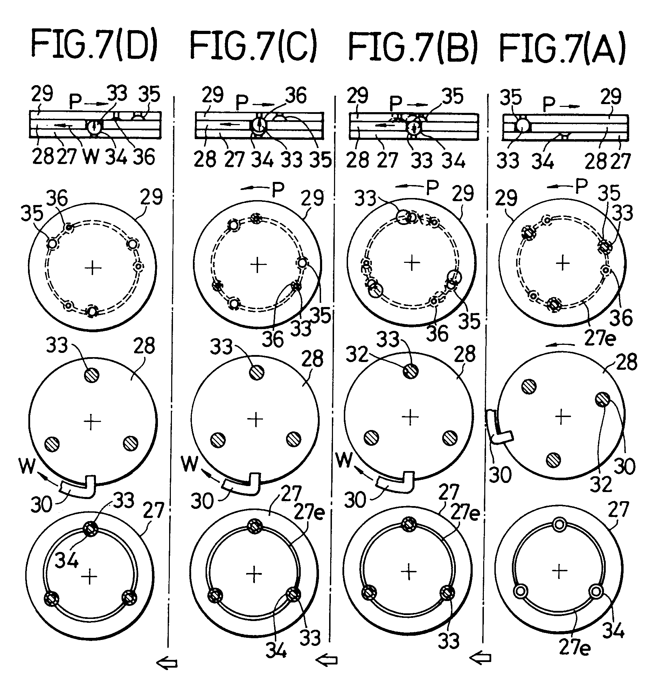

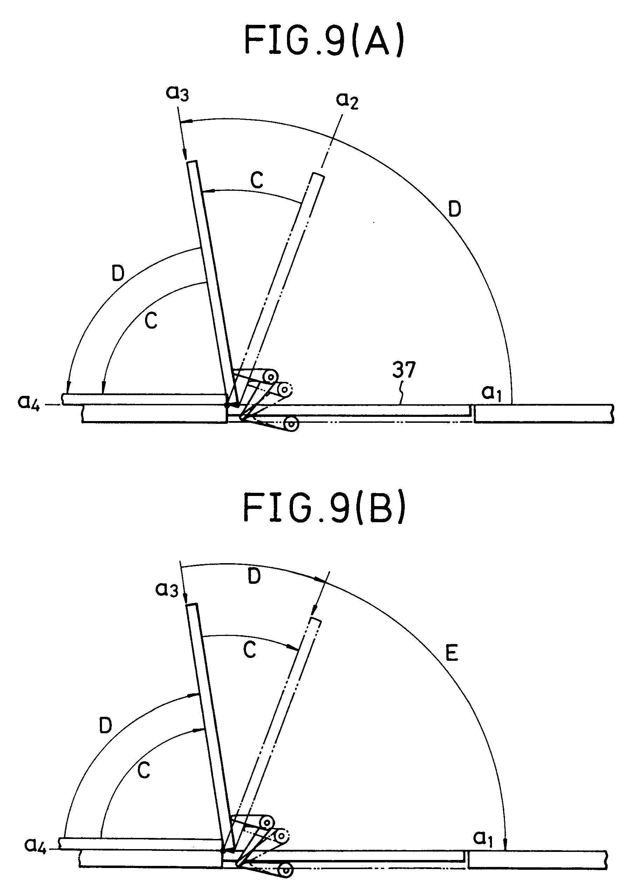

The movable plate 29 locks to the intermediate plate 28 by the rotary connectors 33,.. at the position of closed door as shown in Figs. 6(a) and 7(a). The movable plate 29 is released from the lock to the intermediate plate 28 at a spring power locking position a₂ where the door 37 is opened at a predetermined angle from the door closing position a₁ as shown in Fig. 9(a), and instead the stationary plate 27 and the movable plate 29 are so set in advance to predetermined positions that the intermediate plate 28 and the stationary plate 27 are locked from the spring power locking position a₂ to the door fully opening angle a₄, and fixed to the inner cylinder 3 and the sub case 31.

Referring to Figs. 7(a), 7(b), 7(c), 7(d), three door locking recesses 36,.. are formed, in addition to the recesses 35,.. at an equal interval in a circumferential direction on the same circumferential line as that of the recesses 35,.. on the movable plate 29.

The door locking recesses 36,.. are so formed as to be deviated at a predetermined size in a circumferential direction with respect to the recesses 35, and formed in depths to be shallower than those of the recesses 35. When the door 37 is opened to a door opening angle a₃ shown in Figs. 9(a) and 9(b), the rotary connectors 33,.. are respectively engaged with both the recesses 34 of the stationary plate 27 and the locking recesses 36,.. as shown in Fig. 7(c) and 8(c), thereby locking the stationary plate 27, the intermediate plate 28 and the movable plate 29. Thus, the door 37 is locked at the door opening angle a₃ as shown in Fig. 9(a) and 9(b).

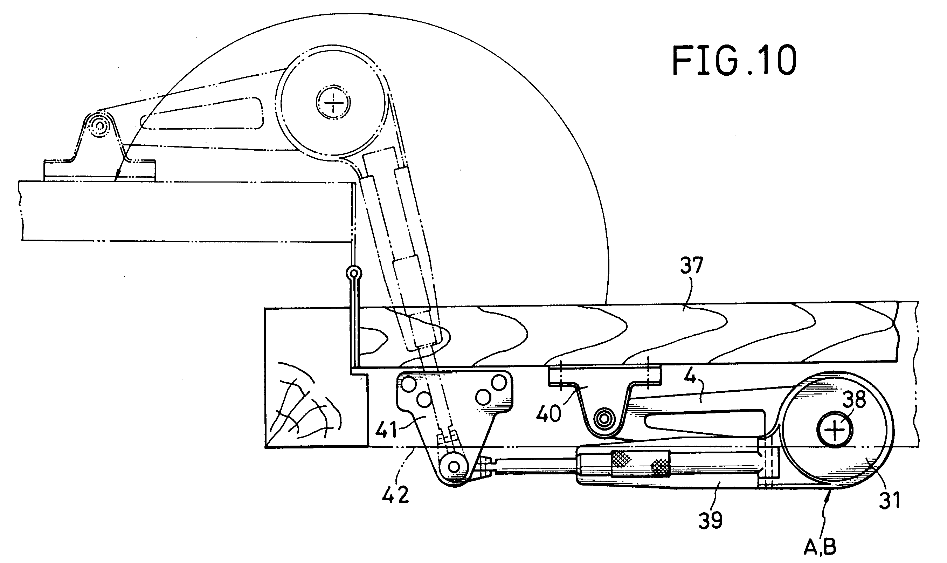

Further, as shown in Fig. 10, a sub arm 39 capable of adjusting in length is pivotally secured to one side of the case 31. In the damper, the arm of the body case 1 is fixed by a mounting bracket 40 pivotally secured to the end of the arm 4 to the upper portion of the hanging base side of the door 37, while the sub arm 39 is mounted on the door 37 by fixing it to an upper frame 42 by the mounting plate 41 pivotally secured to the end of the arm 39.

With the angle clutch B constructed as described above, when the movable plate 29 is rotated from the door closed position in Figs. 6(a), 7(a) and 8(a) by a door opening force P in a direction of arrows as shown in Figs. 6(a) - 6(c), 7(a) - 7(d) and 8(a) - 8(d), the intermediate plate 28 is also rotated together.

Thus, the return spring 30 is rewound to generate power: in other words the recovering force of the return spring is accumulated.

At the position shown in Figs. 7(b) and 8(b), the recesses 34,.. and 35,.. of the stationary plate 27 and the movable plate 29 respectively coincide with the through holes 32,.. of the intermediate plate 28 so that the intermediate plate 28 is not rotated any further. Therefore, when the movable plate 29 is continuously rotated, the rotary connectors 33,.. are shifted from the recesses 35,.. of the movable plate 29 to the recesses 34,.. of the stationary plate 27 to be engaged, and the intermediate plate 28 is locked to the stationary plate 27.

Consequently, the power (recovering force) of the return spring 30 is locked at a predetermined door opening angle a2 shown in Figs. 9(a) and 9(b), and the movable plate 29 adopts a free state. Therefore, the door 37 can be freely moved and stopped in a range from the door opening angle a2 to the fully-open angle a4 of the door.

When the movable plate 29 adopts the free state as described above, the rotary connectors 33,.. generate forces tending to move upward. Therefore, when the movable plate 29 is further rotated, the rotary connectors 33 are respectively engaged with the recesses 36,.. to adopt the state as shown in Fig. 7(c), and the door 37 is locked to a predetermined door opening angle a3 shown in Figs. 9(a) and 9(b).

When the movable plate 29 is further rotated, it adopts the state shown in Figs. 7(d) and 8(d), the movable plate 29 becomes free, and the door 37 adopts its freely moving and stopping state.

In case of closing the door, the door 37 is automatically closed by the spring power from the door opening angle a2 shown in Fig. 9(b) in the reverse operation to that of the door opening direction described above, and the door is closed to the position a1 in Fig. 9(b).

In Figs. 6(a) - 6(c), 7(a) - 7(d) and 8(a) - 8(d), reference numerals 27e and 29e denote rotary connector rotating grooves formed on the stationary plate 27 and the movable plate 29. In Figs. 9(a) and 9(b), reference character C denotes a region in which the door is free to move and stop; D, a damper OFF region; and E, a damper ON region.

It will be noted that the spring power is locked at the predetermined partly-open position a2 of the door, and the door can be stopped at any angle between the partly-open position a2 and the fully-open position a4. The door can be slowly and smoothly closed by the spring effect and the viscous resistance force of the high viscous liquid, from the spring power locking position (partly-open position a2) to the door-closed position a1. Further, the arrangement of the angle clutch ensures that the door closer changes easily and smoothly between its different states. Also, the partly-open position and the angle range of the door free-movement region can be simply changed merely by altering the engaging positions of the rotary connectors with the recesses. Even if the door is abruptly opened or closed or the door is affected by strong wind pressure when open, the components are not affected by strong impact. Therefore, since the door closer is scarcely damaged and the structure of the door closer can be simplified, its durability is excellent with inexpensive manufacture.

## Claims

1. A door closer comprising a damper having a body case (1), a shaft (7) rotatably mounted in the centre of the body case (1), a chamber (9) formed in the body case (1) and filled with a highly viscous liquid, a blade (10) fixed to the shaft (7) and mounted inside the chamber (9), the blade (10) being rotated together with the shaft (7) by a force applied to a rotatable sub case (31) of the damper, by a sub arm (39) fixed to the sub case (31), when the door (37) is opened, the force being accumulated in a return spring (30) which serves automatically to close the door (37) against the resistance force of the highly viscous liquid in the damper, the door closer being characterised in that the damper comprises a pair of said chambers (9,9) filled with the highly viscous fluid which communicates between the two chambers (9,9) via passages (16,17) formed in the shaft (7), a pair of said blades (10,10) fixed to the shaft (7) and mounted inside respective said chambers (9,9), check valves (15,15) disposed in passages (11,11) of the blades (10,10), a stationary plate (27) fixed to the body case (1), an intermediate plate (28) engaged with the shaft (7) for rotation with the shaft (7) and connected to the return spring (30) so as to be rotatable through a predetermined angle against said return spring (30), a movable plate (29) engaged with the sub case (31) for rotation with the sub case (31), the plates (27,28,29) being vertically stacked with their center along the axis of the shaft (7), a plurality of rotary connectors (33) respectively movably engaged in a plurality of through holes (32) formed at intervals along a circumferential line on said intermediate plate (28), the rotary connectors (33) having diameters (R) larger than the thickness (a) of said intermediate plate (28), and an angle clutch comprising recesses (34,35) formed in the stationary and movable plates (27,29) and arranged for disengageably engaging the rotary connectors (33) in the corresponding through holes (32), in such a manner that, as the door is opened from a fully closed position (a1) and the movable plate (29) is correspondingly rotated, the movable plate (29) and the intermediate plate (28) are locked together until the door reaches a predetermined partly-open position (a2) and, upon further rotation of the movable plate (29) in the door opening direction and up to a fully-open position (a4) of the door, the movable plate (29) is released from its lock with the intermediate plate (28) and the intermediate plate (28) is locked to the stationary plate (27).

2. A door closer as claimed in claim 1, characterised in that the angle clutch further comprises a plurality of door locking recesses (36) spaced along the same circumferential line on said movable plate (29) as said recesses (35), said door locking recesses (36) being arranged for disengageably engaging said rotary connectors (33), and said door locking recesses (36) being shallower than said recesses (35) so that the rotary connectors (33) can lock together the movable plate (29), the intermediate plate (28) and the stationary plate (27) when the door is opened to a position (a3) lying between said partly-open position (a2) and said fully-open position (a4).

## Patentansprüche

1. Türschließer mit einem Dämpfer, der ein Hauptgehäuse (1), eine Achse (7), die drehbar im Zentrum des Hauptgehäuses (1) befestigt ist, eine Kammer (9), die in dem Hauptgehäuse (1) ausgebildet ist und mit einer hochviskosen Flüssigkeit gefüllt ist, und einen Flügel (10) aufweist, der an der Achse (7) befestigt ist und innerhalb der Kammer (9) angeordnet ist, wobei der Flügel (10) zusammen mit der Achse (7) durch eine Kraft gedreht wird, die auf ein drehbares Untergehäuse (31) des Dämpfers durch einen Unter-Arm (39), der am Untergehäuse (31) befestigt ist, ausgeübt wird, wenn die Tür (37) geöffnet wird, wobei die Kraft in einer Rückführungsfeder (30) angesammelt wird, die dazu dient, die Tür (37) automatisch gegen die Widerstandskraft der hochviskosen Flüssigkeit im Dämpfer zu schließen, wobei der Türschließer dadurch gekennzeichnet ist, daß der Dämpfer ein Paar der Kammern (9,9), die mit der hochviskosen Flüssigkeit gefüllt sind, die sich zwischen den beiden Kammern (9,9) über Kanäle (16,17), die in der Achse (7) ausgebildet sind, bewegt, ein Paar der Flügel (10,10), die an der Achse (7) befestigt sind und in den entsprechenden Kammern (9,9) angeordnet sind, Rückschlagventile (15,15), die in Durchlässen (11,11) der Flügel (10,10) angeordnet sind, eine feststehende Platte (27), die an dem Hauptgehäuse (1) befestigt ist, eine Zwischenplatte (28), die mit der Achse (7) für Drehung mit der Achse (7) in Eingriff steht und mit der Rückführungsfeder (30) verbunden ist, um so um einen vorbestimmten Winkel gegen die Rückführungsfeder (30) drehbar zu sein, eine bewegbare Platte (29), die mit dem Untergehäuse (31) für Drehung mit dem Untergehäuse (31) in Eingriff steht, wobei die Platten (27,28,29) vertikal gestapelt mit ihrem Zentrum entlang der Mittellinie der Achse (7) angeordnet sind, eine Vielzahl von Drehverbindern (33), die bewegbar in einer Vielzahl von Durchgangslöchern (32) in Eingriff stehen, die in Abständen entlang einer Umfangslinie auf der Zwischenplatte (28) ausgebildet sind, wobei die Drehverbinder (33) Durchmesser (R) haben, die größer sind als die Dicke (a) der Zwischenplatte (28), und eine Winkelkupplung aufweist, die Ausnehmungen (34,35) aufweist, die in den feststehenden und bewegbaren Platten (27,29) ausgebildet und so angeordnet sind, daß sie mit den Drehverbindern (33) in den entsprechenden Durchgangslöchern (32) lösbar in Eingriff kommen können auf solche Weise, daß dann, wenn die Tür von der voll geschlossenen Stellung (a₁) geöffnet wird und die bewegbare Platte (29) entsprechend gedreht wird, die bewegbare Platte (29) und die Zwischenplatte (28) miteinander verriegelt sind, bis die Tür eine teilweise offene Stellung (a₂) erreicht, und bei weiterer Drehung der bewegbaren Platte (29) in der Türöffnungsrichtung und bis zu einer voll offenen Stellung (a₄) der Tür die bewegbare Platte (29) von ihrer Verriegelung mit der Zwischenplatte (28) gelöst wird und die Zwischenplatte (28) mit der feststehenden Platte (27) verriegelt wird.

2. Türschließer nach Anspruch 1, dadurch gekennzeichnet, daß die Winkelkupplung weiter eine Vielzahl von Türverriegelungsausnehmungen (36) aufweist, die entlang derselben Umfangslinie auf der bewegbaren Platte (29) wie die Ausnehmungen (35) in Abständen angeordnet sind, wobei die Türverriegelungsausnehmungen (36) so angeordnet sind, daß sie lösbar mit den Drehverbindern (33) in Eingriff kommen können, und daß die Türverriegelungsausnehmungen (36) flacher sind als die Ausnehmungen (35), so daß die Drehverbinder (33) die bewegbare Platte (29), die Zwischenplatte (28) und die feststehende Platte (27) miteinander verriegeln können, wenn die Tür bis zu einer Stellung (a₃) geöffnet ist, die zwischen der teilweise offenen Stellung (a₂) und der voll offenen Stellung (a₄) liegt.

## Revendications

1. Appareil de fermeture de porte comprenant un amortisseur ayant un corps constitué d'un boîtier (1), un arbre (7) monté de manière à pouvoir tourner au centre du boîtier (1), une chambre (9) formée dans le boîtier (1) et remplie avec un liquide de grande viscosité, une ailette (10) fixée à l'arbre (7) et montée à l'intérieur de la chambre (9), cette ailette (10) tournant avec l'arbre (7) sous l'action d'une force appliquée à un boîtier secondaire (31) rotatif de l'amortisseur, par l'intermédiaire d'un bras secondaire (39) fixé au boîtier secondaire (31), lorsque la porte (37) est ouverte, la force s'accumulant dans un ressort de rappel (30) qui sert à fermer la porte (37) automatiquement contre la force de réaction du liquide de grande viscosité contenu dans l'amortisseur,
appareil de fermeture de porte caractérisé en ce que l'amortisseur comprend une paire de chambres (9, 9) remplies du fluide de très grande viscosité, qui communique entre les deux chambres (9, 9) par l'intermédiaire de deux conduits (16, 17) formés à l'intérieur de l'arbre (7), une paire d'ailettes (10, 10) fixées sur l'arbre (7) et montées à l'intérieur des chambres (9, 9) respectives, des clapets de retenue (15, 15) placés à l'intérieur de conduits (11, 11) des ailettes (10, 10), une plaque statique (27) fixée au boîtier (1), tournant avec l'arbre (7) et reliée au ressort de rappel (30), une plaque mobile (29) solidaire du boîtier secondaire (31) et tournant avec celui-ci, les plaques (27, 28, 29) étant empilées verticalement, leur centre étant situé le long de l'axe de l'arbre (7), une pluralité de connecteurs rotatifs (33) engagés de façon mobile respectivement dans une pluralité de trous traversants (32) formés à des intervalles le long d'une ligne circonférencielle sur ladite plaque intermédiaire (26), les connecteurs rotatifs (33) ayant des diamètres (R) supérieurs à l'épaisseur (a) de cette plaque intermédiaire (28), et un embrayage oblique comprenant des évidements (34, 35) formés dans la plaque fixe et dans la plaque mobile (27, 29) et aménagé pour engager et dégager les connecteurs rotatifs (33) dans les trous traversants correspondants (32), de façon que lorsque la porte est grande ouverte en partant d'une position fermée (a1) et que la plaque mobile (29) tourne de manière correspondante, la plaque intermédiaire (28) est bloquée avec cette plaque mobile jusqu'à ce que la porte atteigne une position prédéterminée entrouverte (a2) et, après poursuite de la rotation de la plaque mobile (29) dans la direction de l'ouverture de la porte et jusqu'à ce que celle-ci soit grande ouverte (a4), la plaque mobile (29) se déverrouille de la plaque intermédiaire (28) et la plaque intermédiaire (28) se verrouille avec la plaque fixe (27).

2. Appareil de fermeture de porte selon la revendication 1, caractérisé en ce que l'embrayage oblique comprend en outre une pluralité d'évidements de verrouillage de porte (36) espacés le long de la même ligne circonférentielle sur la plaque mobile (29) que les évidements (35), les évidements de verrouillage de porte (36) étant aménagés pour s'engager dans les connecteurs rotatifs (33) et s'en dégager, et étant encore moins profonds que les évidements (35) de façon à ce que les connecteurs rotatifs (33) puissent verrouiller ensemble la plaque mobile (29), la plaque intermédiaire (28) et la plaque fixe (27) lorsque la porte est ouverte en position (a3) c'est-à-dire lorsqu'elle est placée entre la position entrouverte (a2) et la position ouverte en grand (a4).
